# EUROPEAN PATENT SPECIFICATION

(11) **EP 1 377 620 B1**
(45) Date of publication and mention of the grant of the patent: **07.06.2017**
(21) Application number: 02707006.9
(22) Date of filing: 28.03.2002
(51) Int. Cl.: C08G 18/76, C08G 18/32, C08K 5/52

(54) **LOW MONOMER ONE COMPONENT FOAM**
1-KOMPONENTEN-SCHAUMSTOFF MIT NIEDRIGEM GEHALT AN MONOMEREN
MOUSSE A UN COMPOSANT A FAIBLE TAUX DE MONOMERE

(30) Priority: 30.03.2001 GB 0108061
(43) Date of publication of application: 07.01.2004
(73) Proprietor: RATHOR AG, 9050 Appenzell (CH)
(72) Inventor: BICKNELL, Rodney, Nr. Accrington, Lancashire BB5 2SL (GB); GRIMSHAW, John, Nr. Accrington, Lancashire BB5 2SL (GB)
(74) Representative: Thiel, Christian
(86) International application number: PCT/GB2002/001481
(87) International publication number: WO 2002/079291

(56) References cited:
- EP-A- 0 105 242
- WO-A-95/23173
- WO-A-96/06124
- DE-A- 4 038 400
- GB-A- 1 101 410
- US-A- 4 385 171

## Description

The present invention relates to processes for producing one component polyurethane foam and foams so produced.

One component foam products are well known and are, in particular, used extensively for gap filling and void filling in construction, automotive, DIY and other markets. In such applications the foam product is typically used for fixing door and window frames into buildings and is applied from a pressurised container or aerosol can. The one component polyurethane foam-forming compositions typically comprise a prepolymer which is formed from an isocyanate component and a polyol component. Exposure of this product to atmospheric moisture at the point of use causes the product to cure to a rigid polyurethane foam.

The one component foam is generally required to form a seal, for instance in voids between window or door profiles and a building. For this, it is necessary that the initial viscosity of the foam is sufficiently low to ensure that expansion into the void is not significantly impeded. It is also necessary for the cured foam to become rigid in nature as it forms an integral part of the fixing and securing process. Typically the foam will expand up to 20 times its volume when dispensed from the aerosol can.

A high monomeric diisocyanate content has previously been considered to be a necessary component of the foam in order to produce a polyurethane foam with useful properties and sufficient mechanical strength. The free monomer level in a conventional foamable composition, which is typically in the range of 2 to 25%, contributes significantly to the rigidity of the finished product. This is due to the fact it is a low molecular weight chain extender or crosslinker that forms a 'hard block' segment in the finished product. The diisocyanate monomers are also of low viscosity and therefore help to reduce the final viscosity of the contents of the aerosol. This allows efficient expansion in the void, as well as allowing satisfactory dispensing from the can at normal pressure ratings. Further, in conventional foams the monomeric diisocyanate also significantly contributes to the reactivity of the foam. Therefore one component foams have, until now, contained significant levels of free monomeric diisocyanate.

This currently causes practical problems in use, as during the dispensing of the contents of the can the volatile monomeric diisocyanate can escape into the atmosphere. This is clearly undesirable in view of the adverse health effect of exposure to isocyanates, which is well known and a recognised concern within the industry. In particular there is difficulty in situations where such products are required to be used in areas of poor ventilation.

The present invention overcomes the above problems by using a prepolymer which has a low monomeric diisocyanate content yet still affords a foam which has a sufficiently low initial viscosity and cures to a sufficiently rigid product that may be used in construction and related applications. Thus a one component foam product is provided that offers a significantly reduced hazard due to monomeric diisocyanate but retains rigidity, has reactivity equal to conventional products and is produced at a manageable viscosity.

Specifically, the present invention provides, in a first aspect, a process for preparing a prepolymer for use in a one component foam dispenser by polymerising a mixture comprising:
(A) an isocyanate component comprising a diisocyanate monomer;
(B) a polyol component comprising one or more rigid foam polyols; the isocyanate index being greater than 2,0 and
(C) a low viscosity component which is non-reactive towards isocyanate and hydroxyl groups selected from non-halogenated phosphates and tris(2-chloropropyl)phosphate; the low viscosity component being included in an amount such that the resultant prepolymer has a viscosity of 300,000 cps or lower at 40°C (Bohlin);
and subsequently removing free diisocyanate monomer from the prepolymer to a level of less than 2% by weight at an elevated temperature and a reduced pressure, the low viscosity component having a boiling point higher than the distillation temperature at the distillation pressure used during the process of removing residual diisocyanate monomer.

The invention also provides, in a second aspect, a process for preparing a prepolymer for use in a one component foam dispenser by polymerising a mixture comprising:
(A) an isocyanate component comprising a diisocyanate monomer; and
(B) a polyol component comprising one or more rigid foam polyols, the isocyanate index being greater than 2,0; then adding
(C) a low viscosity component which is non-reactive towards isocyanate and hydroxyl groups selected from non-halogenated phosphates and tris(2-chloropropyl)phosphate; the low viscosity component being included in an amount such that the resultant prepolymer has a viscosity of 300,000 cps or lower at 40°C (Bohlin);
and subsequently removing free diisocyanate monomer from the prepolymer to a level of less than 2% by weight, at an elevated temperature and reduced pressure, the low viscosity component having a boiling point higher than the distillation temperature at the distillation pressure used during the process of removing residual diisocyanate monomer.

The prepolymers and their production are described and claimed in British patent Application No 0108060. 5.

Preferably the polyurethane foam as produced is suitable for use in construction, automotive or DIY applications.

The isocyanate utilised in the present invention is preferably a diisocyanate, for example toluene diisocyanate (TDI), 4,4'-diphenyl methane diisocyanate (MDI), isophorone diisocyanate, hexamethylene diisocyanate, para-phenylene diisocyanate, 1,3 bis (1-isocyanato-1-methylethyl) benzene (m-TMXDI) or 4, 4'-methylene-bis cyclohexyl diisocyanate (Desmodur W) or a mixture thereof. Most preferably the isocyanate is toluene diisocyanate (TDI) or 4,4'-diphenyl methane diisocyanate (MDI), or a mixture thereof. The 2,4- or the 2,6- isomer of toluene diisocyanate, or a combination of the two isomers, may be used. Preferably toluene diisocyanate of grade TDI 80/20 (80% by weight 2,4- isomer and 20% 2,6- isomer) is used. The 4,4'-diphenyl methane diisocyanate may be pure MDI with a functionality of 2, modified pure MDI with a functionality of from 2.0 to 2.2 or crude MDI with a functionality of less than 3.0.

The isocyanate component may alternatively be a polyisocyanate, for example a biuret, an allophanate or a trimer (isocyanurate). Such polyisocyanates are typically produced from their corresponding diisocyanate and therefore the isocyanate component may contain some diisocyanate in addition to polyisocyanate.

The polyol component of the present invention comprises a rigid foam polyol. As used herein the term "rigid foam polyol" refers to all those polyols known in the industry as being suitable for the production of rigid polyurethane foams; examples include polyols used in the art as the polyol component of two component foam systems which are not primarily designed for use in prepolymer manufacture. Preferably the rigid foam polyol is blended with other polyols.

Typical polyols, or combinations of polyols, for use in the current invention comprise hydroxyl terminated compounds having an average functionality of greater than 2.0, and up to 5, for instance 2.1,2.2 or 3, and up to 5.0, and a molecular weight of from 100 to 6000, preferably from 200 to 3000. Diols may suitably be utilised provided that they are blended with one or more higher functionality polyols. The polyol may suitably be selected from hydroxyl terminated polyethers, such as polyoxypropylene, ethoxylated polyoxypropylene and propoxylated sucrose derivatives, and other polyether polyols, for example polyether polyols with a functionality above 2, for instance from 4 to 5 or more, preferably about 4.6. Hydroxy terminated polyester polyols, natural oils such as castor oil and mannich bases may also be used.

The isocyanate component and polyol component are used in relative amounts such that the isocyanate index (NCO/OH) is greater than 2.0, preferably from 2.1 to 3.0, for example 2.6.

Significantly, a third essential component, a low viscosity component, is included in the production of the prepolymer in order to reduce the viscosity of the product. This material is included in an amount such that the resultant prepolymer has a viscosity of 300 000 cps or lower at 40 C (Bohlin), preferably of from 1000 to 280 000 cps. The material must be non-reactive towards isocyanate and hydroxyl groups and should not adversely affect the desired properties of the end product. The low viscosity component is to be added prior to the process of removing residual diisocyanate monomer from the prepolymer, and it is also important that the low viscosity component is not removed during this process and remains in the product stream. It is necessary that the component has a boiling point higher than the distillation temperature at the distillation pressure used during the process of removing residual diisocyanate monomer, for example a boiling point of 180 C or greater at 5mm Hg (666.6 Pa), preferably a boiling point of 160 C or greater at 2mm Hg (266.6 Pa).
The low viscosity component is selected from non-halogenated phosphates and tris (2-chloropropyl)phosphate. Suitable flame retardants include tri (2-ethylhexyl) phosphate; tris (2-chloropropyl) phosphate (TCPP); triethyl phosphate (TEP); and organo phosphonate esters. Preferably the low viscosity component comprises tri (2-ethylhexyl) phosphate.

The polyurethane prepolymer is prepared by reacting the isocyanate component with the polyol component, optionally in the presence of the low viscosity component, under carefully controlled conditions to produce a material with the correct and consistent molecular weight distribution. If the low viscosity component is not incorporated during prepolymerisation, it may be added to the prepolymer thus formed, or it may be added after the subsequent step of removing free diisocyanate. In contrast to conventional methods, whereby the isocyanate component and polyol component are mixed and reacted in the aerosol can, this method allows for good control of the chemistry and also for the removal of free monomer after production of the prepolymer.

The free diisocyanate monomer is removed from the prepolymer using elevated temperatures and/or reduced pressures by suitable methods known in the art, such as wiped film distillation. The resulting"stripped"product has levels of free diisocyanate monomer of less than 2% by weight, preferably 0.5% or less by weight. Preferably the level of free diisocyanate monomer is reduced to below the level considered to be harmful for the specific diisocyanate in question. It is preferred that the stripped prepolymer contains no more than 0.5% by weight, preferably 0.1% or less, of TDI and that it contains less than 2% by weight, preferably 0.5% or less, of MDI.

The stripped prepolymer may then be placed into a suitable dispensing container together with conventional additives, such as cell stabilisers, foaming agents, propellants and catalysts, as required. The dispensing container may be, for example, an aerosol can with a plastic tube or a gun from the valve which is suitable for dispensing the foam.
Immediately after release from the can the propellants and stabilizers form a froth and the product subsequently cures by free isocyanate groups reacting with moisture in the atmosphere and in the substrate so as to produce the final foam product having the desired physical properties. A typical surface tack free time is from 10 to 60 minutes, for example 30 minutes.

The present invention is illustrated further by means of the following Examples:

### Example 1

Toluene diisocyanate and tri (2-ethylhexyl) phosphate were mixed in a sealed reactor under a nitrogen blanket. The mixture was then heated to 60 C and a preblended mixture of RH 360 and P400 was added slowly to the mixture such that the temperature was maintained below 70 C. The resulting mixture was stirred constantly and kept at this temperature for a minimum of one hour. The reaction was allowed to continue until the theoretical isocyanate value (13.2%) was reached.

| **Component** | **% weight** |
|---|---|
| TDI 80/20 | 44.80 |
| (Eq. Wt = 87.0; CAS No.26471-62-5) | |
| Voranol RH360 - High functional polyether polyol | 17.60 |
| (f = 4.6; OHV = 345 - 375; Eq. Wt = 155.8) | |
| Voranol P400 - Polyether diol PPG | 17.60 |
| (OHV = 250 - 270; Eq. Wt = 200.4) | |
| Tri(2-ethyl hexyl phosphate) | 20.00 |
| (CAS No. 78-42-2) | |
| **Total** | **100.00** |

| | |
|---|---|
| Prepolymer Index(NCO/OH ratio) | 2.60 |
| Polyol Blend Functionality | 3.3 (approx) |

The resulting prepolymer was charged to a Canzler wiped film evaporator of 316 stainless steel construction in order to remove the excess diisocyanate. The distillation chamber was set to 160°C and a vacuum of approximately 2 mm Hg (266.6 Pa) applied. The material was run through at a rate of approximately 1 to 2 kg/hr and the finished prepolymer product was collected and stored in a watertight container capped with dry nitrogen.

The finished prepolymer product was a pale straw coloured liquid with an isocyanate (NCO) content of 8.50% and a free TDI content of less than 0.1 %. Further properties of the prepolymer are shown in Table 2 below.

### Examples 2 and 3

The method of Example 1 was repeated using different ratios of RH360 to P400 in the polyol blend used in the prepolymer. The compositions of Examples 2 and 3 are shown in Table 1 and the properties of the prepolymers obtained are shown in Table 2 below.

**Table 1**

| **Component** | **% weight Example 2** | **% weight Example 3** |
|---|---|---|
| TDI 80/20 | 44.80 | 44.80 |
| (Eq. Wt = 87.0; CAS No.26471-62-5) | | |
| Voranol RH360 - High functional polyether polyol | 21.12 | 14.08 |
| (f = 4.6; OHV = 345 - 375; Eq. Wt = 155.8) | | |
| Voranol P400 - Polyether diol PPG | 14.08 | 21.12 |
| (OHV = 250 - 270; Eq. Wt = 200.4) | | |
| Tri(2-ethyl hexyl phosphate) | 20.00 | 20.00 |
| (CAS No. 78-42-2) | | |
| **Total** | **100.00** | **100.00** |

**Table 2**

| | **Prepolymer** | | | **Before Stripping** | | **After Stripping** | | | | | |
|---|---|---|---|---|---|---|---|---|---|---|---|
| | RH360 /P400 | Index (NCO/ OH) | NCO % | Free TDI % | Visc Lv 4/6 @25°C | NCO % | Free TDI % | Viscosity Bohlin cps (@ given shear rate in 1/s) | | | |
| | | | | | | | | 40°C | 50°C | 60°C | 70°C |
| **Eg.1** | 50/50 | 2.6 | 13.2 | 10.7 | 15000 | 8.50 | 0.03-0.06 | 15000 | 5000 | 2000 | 1000 |
| **Eg.1** | 60/40 | 2.6 | 13.5 | | 34000 | | | 270000 (3.03e+0) | 63000 (1.34e+1) | 19000 (4.52e+1) | 8000 (1.29e+2) |
| **Eg.1** | 40/60 | 2.6 | 12.4 | 10.5 | 8000 | 8.35 | 0.03-0.06 | 7600 (1.14e+2) | 2700 (3.29e+2) | 1200 (7.42e+2) | 750 (1.07e+3) |

### Example 4

A low monomer one component foam aerosol can was produced by filling a 300ml aerosol can with the following components:

| **Component** | **Amount (g)** | **Amount (%)** |
|---|---|---|
| Prepolymer of Example 1 | 250.00 | 75.59 |
| Polydimethylsiloxane copolymer (SC240) | 0.25 | 0.08 |
| Polydimethylsiloxane copolymer (B8919) | 1.00 | 0.30 |
| 2,2'-dimorpholinodiethylether (DMDEE) | 4.00 | 1.21 |
| Propylene oxide ethylene oxide trimethylolpropane copolymer (A2580) | 0.50 | 0.15 |
| Tetrafluoroethane (134A) | 65.00 | 19.65 |
| Dimethyl ether (DME) | 10.00 | 3.02 |
| **Total** | **330.75** | **100.00** |

## Claims

1. A process for preparing a prepolymer for use in a one component foam dispenser by polymerising a mixture comprising:
(A) an isocyanate component comprising a diisocyanate monomer;
(B) a polyol component comprising one or more rigid foam polyols; the isocyanate index being greater than 2,0 and
(C) a low viscosity component which is non-reactive towards isocyanate and hydroxyl groups selected from non-halogenated phosphates and tris(2-chloropropyl)phosphate; the low viscosity component being included in an amount such that the resultant prepolymer has a viscosity of 300,000 cps or lower at 40°C (Bohlin);
and subsequently removing free diisocyanate monomer from the prepolymer to a level of less than 2% by weight at an elevated temperature and a reduced pressure, the low viscosity component having a boiling point higher than the distillation temperature at the distillation pressure used during the process of removing residual diisocyanate monomer.

2. A process for preparing a prepolymer for use in a one component foam dispenser by polymerising a mixture comprising:
(A) an isocyanate component comprising a diisocyanate monomer; and
(B) a polyol component comprising one or more rigid foam polyols, the isocyanate index being greater than 2,0; then adding
(C) a low viscosity component which is non-reactive towards isocyanate and hydroxyl groups selected from non-halogenated phosphates and tris(2-chloropropyl)phosphate; the low viscosity component being included in an amount such that the resultant prepolymer has a viscosity of 300,000 cps or lower at 40°C (Bohlin);
and subsequently removing free diisocyanate monomer from the prepolymer to a level of less than 2% by weight, at an elevated temperature and reduced pressure, the low viscosity component having a boiling point higher than the distillation temperature at the distillation pressure used during the process of removing residual diisocyanate monomer.

3. The process according to any one of the preceding claims, wherein the free diisocyanate monomer is removed from the prepolymer to a level of 0.5% or less by weight.

4. The process according to any one of the preceding claims, wherein the isocyanate of component (A) comprises one or more diisocyanates selected from 2,4-toluene diisocyanate, 2,6-toluene diisocyanate and 4,4'-diphenyl methane diisocyanate.

5. The process according to claim 4, wherein toluene diisocyanate is removed from the prepolymer to a level of 0.1 % or less by weight.

6. The process according to any one of the preceding claims, wherein the polyol of component (B) comprises one or more hydroxyl terminated compounds having a functionality of from greater than 2.0 to 5 and a molecular weight of from 100 to 6000.

7. The process according to any one of the preceding claims, wherein component (C) comprises one or more non-halogenated phosphates.

8. The process according to claim 7, wherein component (C) comprises one or more compounds selected from tri (2-ethylhexyl) phosphate and di-2-ethylhexyl phthalate.

9. The process according to any one of the preceding claims, wherein free diisocyanate monomer is removed form the prepolymer by wiped film distillation.

## Patentansprüche

1. Verfahren zur Herstellung eines Prepolymers zur Verwendung in einem Einkomponenten-Schaum-Dispenser durch die Polymerisierung eines Gemischs umfassend:
(A) eine Isocyanatkomponente mit einem Diisocyanatmonomer;
(B) eine Polyolkomponente mit einem oder mehreren Hartschaumstoff-Polyolen, wobei der Isocyanatindex größer als 2,0 ist; und
(C) eine niederviskose Komponente, die nicht mit Isocyanaten und Hydroxyl-Gruppen reaktiv ist, ausgewählt aus nicht-halogenierten Phosphaten und Tris(2-chlorpropyl)phosphat; wobei die niederviskose Komponente in einer Menge hinzugefügt wird, dass das erhaltene Prepolymer eine Viskosität von 300.000 cps oder weniger bei 40 °C (Bohlin) aufweist;
und anschließend Entfernen von freiem Diisocyanatmonomer aus dem Prepolymer bis auf einen Anteil von weniger als 2 Gew.-% bei einer erhöhten Temperatur und einem reduzierten Druck, wobei der Siedepunkt des niederviskosen Anteils über der Destillationstemperatur bei dem Destillationsdruck liegt, der in dem Prozess zur Entfernung von restlichem Diisocyanatmonomer verwendet wird.

2. Verfahren zur Herstellung eines Prepolymers zur Verwendung in einem Einkomponenten-Schaum-Dispenser durch die Polymerisierung eines Gemischs umfassend:
(A) eine Isocyanatkomponente mit einem Diisocyanatmonomer;
(B) eine Polyolkomponente mit einem oder mehreren Hartschaumstoff-Polyole, wobei der Isocyanatindex größer als 2,0 ist; dann Hinzufügen
(C) einer niederviskosen Komponente, die nicht mit Isocyanaten und Hydroxyl-Gruppen reaktiv ist, ausgewählt aus nicht-halogenierten Phosphaten und Tris(2-chlorpropyl)phosphat; wobei die niederviskose Komponente in einer Menge hinzugefügt wird, dass das erhaltene Prepolymer eine Viskosität von 300.000 cps oder weniger bei 40 °C (Bohlin) aufweist;
und anschließen Entfernen von freiem Diisocyanatmonomer aus dem Prepolymer bis auf einen Anteil von weniger als 2 Gew.-% bei einer erhöhten Temperatur und einem reduzierten Druck, wobei der Siedepunkt der niederviskosen Komponente über der Destillationstemperatur bei dem Destillationsdruck liegt, der in dem Prozess zur Entfernung von restlichem Diisocyanatmonomer verwendet wird.

3. Verfahren nach einem der vorherigen Ansprüche, wobei das freie Diisocyanatmonomer aus dem Prepolymer bis auf einen Anteil von 0,5 Gew.-% oder weniger entfernt wird.

4. Verfahren nach einem der vorherigen Ansprüche, wobei das Isocyanat aus Komponente (A) ein oder mehrere Isocyanate umfasst ausgewählt aus der Gruppe aus Toluol-2,4-diisocyanat, Toluol-2,6-diisocyanat und Diphenylmethan-4,4'-diisocyanat.

5. Verfahren nach Anspruch 4, wobei das Toluoldiisocyanat aus dem Prepolymer bis auf einen Anteil von 0,1 Gew.-% oder weniger entfernt wird.

6. Verfahren nach einem der vorherigen Ansprüche, wobei das Polyol aus Komponente (B) einen oder mehrere Hydroxyl-terminierte Stoffe mit einer Funktionalität von größer 2.0 bis 5 und einer Molekülmasse von 100 bis 6000 umfasst.

7. Verfahren nach einem der vorherigen Ansprüche, wobei Komponente (C) ein oder mehrere nicht-halogenierte Phosphate umfasst.

8. Verfahren nach Anspruch 7, wobei Komponente (C) einen oder mehrere Stoffe ausgewählt aus Tris(2-ethylhexyl)phosphat und Bis(2-ethylhexyl)phthalat umfasst.

9. Verfahren nach einem der vorherigen Ansprüche, wobei freies Diisocyanatmonomer mittels Dünnschichtdestillation aus dem Prepolymer entfernt wird.

## Revendications

1. Procédé pour la préparation d'un prépolymère destiné à être utilisé dans un distributeur de mousse à un composant par polymérisation d'un mélange comprenant :
(A) un composant isocyanate comprenant un monomère diisocyanate ;
(B) un composant polyol comprenant un ou plusieurs polyols pour mousse rigide ; l'indice d'isocyanate étant supérieur à 2,0, et
(C) un composant de faible viscosité qui est non réactif vis-à-vis de groupes isocyanate et hydroxyle choisi parmi les phosphates non halogénés et le phosphate de tris(2-chloropropyle) ; le composant de faible viscosité étant inclus en une quantité telle que le prépolymère résultant a une viscosité inférieure ou égale à 300 000 cP à 40 °C (Bohlin) ;
et par la suite élimination de monomère diisocyanate libre du prépolymère à un niveau inférieur à 2 % en poids à une température élevée et une pression réduite, le composant de faible viscosité ayant un point d'ébullition supérieur à la température de distillation à la pression de distillation utilisée pendant le procédé d'élimination de monomère diisocyanate résiduel.

2. Procédé pour la préparation d'un prépolymère destiné à être utilisé dans un distributeur de mousse à un composant par polymérisation d'un mélange comprenant :
(A) un composant isocyanate comprenant un monomère diisocyanate ; et
(B) un composant polyol comprenant un ou plusieurs polyols pour mousse rigide, l'indice d'isocyanate étant supérieur à 2,0 ; puis ajout de
(C) un composant de faible viscosité qui est non réactif vis-à-vis de groupes isocyanate et hydroxyle choisi parmi les phosphates non halogénés et le phosphate de tris(2-chloropropyle) ; le composant de faible viscosité étant inclus en une quantité telle que le prépolymère résultant a une viscosité inférieure ou égale à 300 000 cP à 40 °C (Bohlin) ;
et par la suite élimination de monomère diisocyanate libre du prépolymère à un niveau inférieur à 2 % en poids, à une température élevée et une pression réduite, le composant de faible viscosité ayant un point d'ébullition supérieur à la température de distillation à la pression de distillation utilisée pendant le procédé d'élimination de monomère diisocyanate résiduel.

3. Procédé selon l'une quelconque des revendications précédentes, dans lequel le monomère diisocyanate libre est éliminé du prépolymère à un niveau inférieur ou égal à 0,5 % en poids.

4. Procédé selon l'une quelconque des revendications précédentes, dans lequel l'isocyanate du composant (A) comprend un ou plusieurs diisocyanates choisis parmi le 2,4-diisocyanate de toluène, le 2,6-diisocyanate de toluène et le 4,4'-diisocyanate de diphénylméthane.

5. Procédé selon la revendication 4, dans lequel le diisocyanate de toluène est éliminé du prépolymère à un niveau inférieur ou égal à 0,1 % en poids.

6. Procédé selon l'une quelconque des revendications précédentes, dans lequel le polyol du composant (B) comprend un ou plusieurs composés à terminaison hydroxyle ayant une fonctionnalité de plus de 2,0 à 5 et une masse moléculaire de 100 à 6000.

7. Procédé selon l'une quelconque des revendications précédentes, dans lequel le composant (C) comprend un ou plusieurs phosphates non halogénés.

8. Procédé selon la revendication 7, dans lequel le composant (C) comprend un ou plusieurs composés choisis parmi le phosphate de tri(2-éthylhexyle) et le phtalate de di-2-éthylhexyle.

9. Procédé selon l'une quelconque des revendications précédentes dans lequel le monomère diisocyanate libre est éliminé du prépolymère par distillation à film raclé.
